# EUROPEAN PATENT SPECIFICATION

(11) **EP 3 320 176 B1**
(45) Date of publication and mention of the grant of the patent: **01.05.2019**
(21) Application number: 16738953.5
(22) Date of filing: 29.06.2016
(51) Int. Cl.: E21B 43/12

(54) **DOWNHOLE LINEAR MOTOR AND PUMP SENSOR DATA SYSTEM**
BOHRLOCHLINEARMOTOR- UND PUMPENSENSORDATENSYSTEM
SYSTÈME DE DONNÉES DE CAPTEUR DE MOTEUR LINÉAIRE ET DE POMPE DE FOND DE TROU

(30) Priority: 08.07.2015 US 201562189957 P
(43) Date of publication of application: 16.05.2018
(73) Proprietor: Moog Inc., East Aurora, NY 14052 (US)
(72) Inventor: BELL, Frank, Springfield, PA 19064 (US); CARDAMONE, David, P., Lansdale, PA 19446 (US); SINGH, Inderjit, Williamsville, NY 14221 (US); SANTACESARIA, Mark, Alden, NY 14004 (US); HALLORAN, Daniel, J., East Amherst, NY 14051 (US); ROBERTS, Jonathan, Cheektowaga, NY 14225 (US)
(74) Representative: Withers & Rogers
(86) International application number: PCT/US2016/040078
(87) International publication number: WO 2017/007656

(56) References cited:
- WO-A2-2014/082074
- CA-A1- 2 912 115
- US-A- 5 831 353

## Description

### TECHNICAL FIELD

The present invention is directed to downhole pump systems, and more particularly a sensor data system for a linear motor downhole pump.

### BACKGROUND ART

Often there is not enough pressure for wells to produce at commercially viable levels without assistance in lifting formation fluids to the surface. Artificial lift devices are therefore used to pump oil or other liquids from underground or subsurface to ground or surface level.

A common approach for moving production fluids to the surface includes the use of a submersible pump. These pumps are installed in the well itself, typically at the lower end of the production tubing. One type of such a submersible pump generally comprises a cylindrical housing and an inner reciprocating piston, which reside at the base of the production line. The pump has an inlet at the bottom end of the piston and an outlet at the top end. The pump forces a first volume of fluid upward within the production tubing during an upstroke and a second volume of fluid upward within the tubing during the pumps downstroke. The piston is reciprocated axially within the well bore by a linear magnetic motor.

Linear magnetic motors include a stator assembly and a shaft that is driven to move linearly (that is, as a straight line translation) with respect to the stator assembly. The shaft member is at least partially surrounded by the stator and is held in place relative to the stator assembly by a bearing. The shaft generates a magnetic field by virtue of having a series of built in permanent magnets. The stator generates magnetic fields through a series of annular magnetic coils or windings. By timing the flow of current in the coils with respect to the position and/or momentum of the shaft, the interaction of magnetic forces from the shaft and from the stator will actuate the shaft to move linearly either up or down.

The motor is powered by an electrical cable extending from the surface to the bottom of the well. The power supply generates the magnetic field within the coils of the motor, which in turn imparts an oscillating force on the shaft of the motor. The shaft thereby is translated in an up and down or linear fashion within the well. The shaft is connected, through a linkage, to the piston of the pump and thus imparts translational or lineal movement to the pump piston. The linear electric motor thus enables the piston of the pump to reciprocate vertically, thereby enabling fluids to be lifted with each stroke of the piston towards the surface of the well.

U.S. Patent No. 5,831,353 discloses a motor-pump assembly having a positive displacement pump and a brushless DC linear motor for driving the pump in a reciprocating manner to allow the fluids in the production tube to be lifted to the upper ground level. A motor controller is provided for controlling the linear motor and supplies the motor with a certain number of direct current pulses. A coupling arrangement connects the pump to the motor. WO 2014/082074 A2 discloses a method and system for controlling a linear motor for a deep well oil pump.

### BRIEF SUMMARY OF THE INVENTION

With parenthetical reference to the corresponding parts, portions or surfaces of the disclosed embodiment, merely for purposes of illustration and not by way of limitation, an oil well installation (15) is provided comprising tubing (17) arranged in a well (18) and forming a flow channel to a surface level for fluids originating from below the surface level; a pump (19) disposed in the well; a linear actuator (20) disposed in the well and configured to actuate the pump; a cable (24) supplying electric power from the surface level to the linear actuator; a surface controller (50) connected with the linear actuator and configured to control the linear actuator; multiple downhole sensors (30, 31, 32, 33, 34 and 35) configured to sense multiple different operating parameters of the linear actuator and/or the pump; a downhole signal processor (40) communicating with the sensors and configured to receive sensor data from the sensors and to output serial data; a communication cable (23) between the sensor processor and the surface controller, the communication cable having at least two paired transmission lines (25, 26); a downhole differential signal driver (41) configured to receive the serial data and to output data signals to the paired transmission lines; and a surface receiver (27) connected to the communication cable and configured to receive the signals from the differential signal driver via the paired transmission lines.

The multiple sensors may be selected from a group consisting of a temperature sensor (32, 33), a position sensor (34), a vibration sensor (35), an inclination sensor (35) and a pressure sensor (30, 31). The multiple sensors may be selected from a group consisting of a motor stator thermocouple (33), a pump inlet temperature transducer (32), a pump inlet pressure transducer (31), a pump outlet pressure transducer (30), and a synchronous serial interface encoder (34) configured to sense position of a shaft (22) of the actuator.

The linear actuator may comprise a brushless permanent magnet motor and the sensors may comprise a motor position encoder (34) configured to sense position of a shaft (22) of the actuator and an operating sensor selected from a group consisting of a temperature sensor (32, 33), a vibration sensor (35), an inclination sensor (35) and a pressure sensor (30, 31), and wherein the serial data comprises position data from the encoder and operating data from the operating sensor. The surface controller may comprise a clock (28) communicating with the signal processor and the serial data from the signal processor may comprise a synchronous serial data output. The installation may further comprise an analog to digital converter (43) communicating with at least one of the sensors and a multiplexer (42) configured to receive sensor signals from at least two of the sensors and to output a serial data signal. The actuator may comprise a stator (21) having an inner opening and a shaft (22) disposed in the opening and configured and arranged to reciprocate linearly in an actual direction relative to the stator under the effect of the magnetic field generated by the stator. The pump may comprise an inlet (51), an outlet (52) and a piston (70) coupled to the actuator shaft.

### BRIEF DESCRIPTION OF THE DRAWINGS

FIG. 1 is a schematic vertical sectional view of an oil-well installation showing an actuator and pump system having an embodiment of the improved sensor data system.
FIG. 2 is a schematic of the actuator and pump system shown in FIG. 1.
FIG. 3 is a schematic of the sensor data system shown in FIG. 2.

### DESCRIPTION OF THE PREFERRED EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., crosshatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

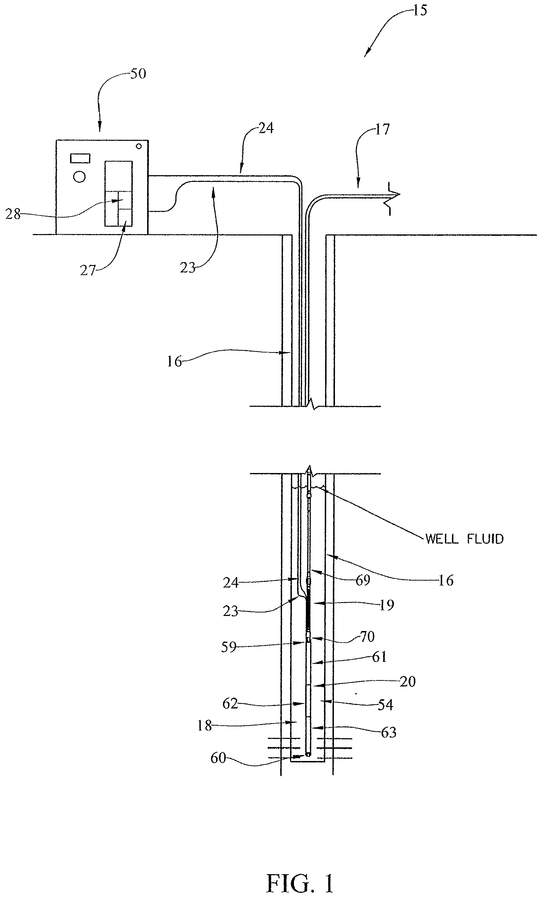

Referring now to the drawings, and more particularly to FIG. 1, an oil well pump and linear magnetic motor system is provided, a first embodiment of which is generally indicated at 15. As shown, a well hole extends from the surface level to a point below ground. The well hole is lined with casing 16 to form well bore 18 that includes perforations providing fluid communication between well bore 18 and a hydrocarbon-bearing formation there around. Pump 19 and linear actuator or motor 20 are disposed at the bottom of well bore 18 and are provided to artificially lift production fluid from well bore 18 through tubing string 17 to a collection point at the surface.

More specifically, production fluid migrates from the subsurface formation through perforations in casing 16 and collects in well bore 18. Pump 19 generally comprises cylindrical housing 69 and inner reciprocating piston 70. Linear actuator 20 is disposed below pump 19 in well bore 18. Linear actuator 20 includes stator 21 and shaft 22, which is connected to piston 70 by actuator rod 64. Linear actuator 20 is powered by electric cable 24 extending from a motor driver in controller cabinet 50 at the surface to the bottom of well bore 18. The power supply generates a magnetic field within coils of stator 21, which in turn imparts an oscillating force on magnetic shaft 22 and actuator rod 64. Shaft 22 and actuator rod 64 are thereby translated in an up and down or linear fashion within well bore 18, which thus imparts linear movement to pump piston 70. This enables piston 70 of pump 19 to reciprocate vertically, thereby enabling fluids to be lifted with each stroke of piston 70 towards the surface of well 18. Pump inlet 51 is disposed at the bottom end of pump housing 69 and pump outlet 52 is disposed at the top end of piston 70. Pump 19 forces a first volume of fluid upward within production tubing 17 during an upstroke of piston 70 in pump housing 69 and a second volume of fluid upward within pump housing 69 during a downstroke of piston 70 in pump housing 69.

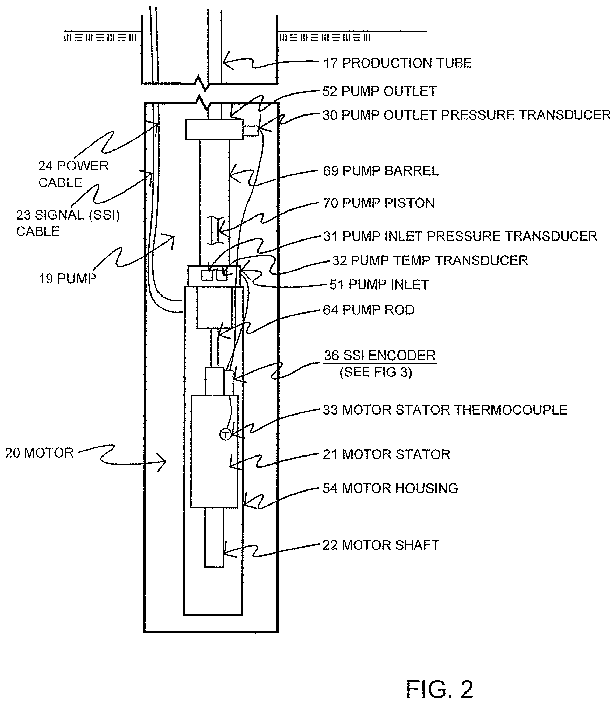

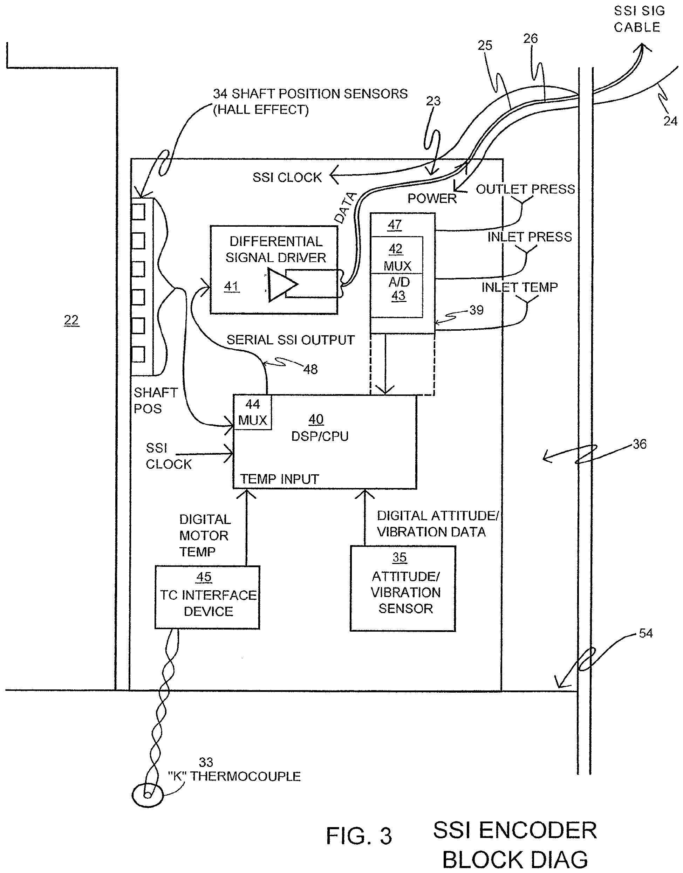

In this embodiment, actuator 20 is a three-phase permanent magnet linear DC electric motor having stationary stator 21 and sliding shaft 22. Motor 20 receives power from three-phase power line 24 from motor driver 50. With references to FIGS. 2 and 3, linear actuator 20 generally comprises housing 54, stator 21, shaft 23 and actuator rod 64. Stator 21 and shaft 23 are disposed in cylindrical housing 54. Stator 21 does not move axially relative to housing 54.

As shown in FIGS. 3 and 4, linear magnetic motor 20 generally includes stator 21 and shaft 23. Stator 21 is a generally hollow cylindrical member elongated about axis x-x and having inner cylindrical passage 22. Shaft 23 is a generally hollow cylindrical member coincident with stator 21 and moves linearly along axis x-x through passage 22 relative to stator 21. Movement along axis x-x is referred to herein as movement in the axial direction.

Down-hole pump 19 includes a standing valve, a traveling valve, piston or plunger 70, inlet 51, and outlet 52. As piston 70 of pump 19 is forced up and down by motor 20, oil and other fluid is drawn into inlet 51, and pushed up out of outlet 52. Outlet 52 is coupled to production tubing 17 leading to the surface of the oil well.

As shown in FIGS. 2 and 3, coupled to motor 20 is data processing system 36. Data processing system 36 communicates with multiple downhole sensors configured to sense different operating parameters of motor 20 and pump 19. As shown in FIGS. 2-3, such sensors include pump outlet pressure transducer 30, pump inlet pressure transducer 31, pump inlet temperature transducer 32, motor stator thermocouple 33, attitude or inclination and vibration sensor 35 and motor shaft position sensor system 34. Such signals and commands are communicated by signal cable 23, which extends from data processing system 36 on actuator 20 to controller cabinet 50 at the surface of well 18.

Position sensors 34 are Hall Effect Devices (HEDs) configured to sense the position and speed of linear motor shaft 23 relative to stator 21. As shown, sensors 34 are positioned within data processing system 36 at spaced axial locations proximate to shaft 22. As discussed below, sensors 34 are inputs to a synchronous serial interface (SSI) encoder for sensing the position of the linear motor shaft.

Sensor 33 is a temperature sensor for monitoring the temperature of motor 20. In this embodiment, sensor 33 comprises a K-type (chromel/alumel) thermocouple positioned between motor windings in steel stator 21. Thermocouple 33 is connected to thermocouple electrical interface 45, which outputs digital motor temperature data. In this embodiment, interface 45 is a cold-junction compensated thermocouple-to-digital converter.

Sensor 35 is a microelectromechanical system (MEMS) that provides angular inclination digital data and vibration digital data. Thus, the angle at which motor 20 is mounted may be measured by inclinometer 35.

Sensor 30 is a pressure transducer that provides pressure readings at outlet 52. Sensor 31 is a pressure transducer that provides pressure readings at inlet 51. Pressure sensor 31 provides oil or fluid pressure at inlet 51 which may be used to determine the depth of oil remaining in the oil well. Sensor 32 is a temperature transducer that provides temperature readings at pump inlet 51. The outputs from transducers 30, 31 and 32 are received by single transducer interface 47 having analog-to-digital converter 43 and multiplexer 42. Thus, transducer interface 47 outputs a serial digital signal. System 15 may contain other and/or alternate sensors for monitoring pump operation, motor operation, and/or deep oil well conditions. The data interfaces may be implemented using alternative protocols for either analog or digital signal transfer.

As shown in FIG. 3, downhole data processing system 36 generally comprises digital signal processor unit 40, differential signal driver 41, transducer interface 47, thermocouple interface 45, MEMS sensor 35 and shaft position sensor 34.

In this embodiment, signal processor unit 40 is a digital signal processor (DSP) chip or CPU having multiplexor 44. Processor 40 may include data sampling and storage mechanisms for receiving and storing sensory data and may include data storage for storing operational parameters as well as sensory data logs. In particular, in this embodiment processor 40 is a single chip embedded microcontroller incorporating a 32 bit DSP processing unit along with memory, oscillator, clock, watchdog and I/O in a 100 pin surface mount package. It incorporates 16 channel, 12 bit A/D converter 43 that interfaces with the analog sensor data inputs as well as digital inputs to accept the digital sensor data. The digital signal processor also has serial output 48 to directly interface with SSI serial bus drivers 41 for exchange of data with surface controller 50. Processor 40 accepts the sensor data inputs from the various system sensors, reformats the data in the SSI format and transmits the data with the appropriate timing via the SSI bus to surface controller 50. The DSP also monitors the encoder data integrity, power supplies and a separate motor temperature switch and sets fault bits in the SSI data words if the parameters fall outside of acceptable levels. The DSP also continuously monitors the states of the HED devices sensing the motor shaft and through DSP algorithms continually calculates and updates the motor shaft position.

Processor 40 communicates with thermocouple 33 via thermocouple interface 45, communicates with outlet pressure transducer 30, inlet pressure transducer 31 and inlet temperature transducer 32 via transducer interface 47, communicates directly with shaft position sensors 34, and communicates directly with MEMS sensor 35. As shown, analog signals from outlet pressure transducer 30, inlet pressure transducer 31 and inlet temperature transducer 32 are converted by interface 47 into digital signals and multiplexed into a single line. Digital signals from MEMS 35 are communicated to processor 40. In addition, signals from shaft position sensors 34 are provided to processor 40. Processor 40 is configured to receive such data inputs and to provide a serial SSI output signal 48 to differential signal driver 41. Data is transmitted by synchronizing the transmission at the receiving and sending ends using a common clock signal from clock 28 located in cabinet 50 at the surface of well bore 18.

Differential signal driver 41 transmits such data electrically via two complementary signals sent on paired wires 25 and 26 of communication cable 23 to receiver 27 in cabinet 50 above ground. Differential signaling improves the resistance to electromagnetic interference, making it a reliable communication channel over long transmission lengths and harsh external environments. At the surface end of cable 23, receiver 27 reads the difference between the two signals. In this embodiment, high voltage differential signals are employed.

Thus, the encoder output signal is converted to a digital data word for transmission over a differential serial data bus. SSI encoder system 36 embeds position data in a digital data word for transmission to controller 50. This allows for additional data such as sensor 30-33 and 35 outputs to be embedded and transmitted over to the digital bus in addition to HED derived motor position data from position sensor 34. The digital word provides the bandwidth required for operation of motor 20 at desired speeds while differential signal driver 41 maintains signal integrity and noise immunity over long transmission distances from the bottom of well bore 18 to the surface and controller 50. Additional data from sensors 30, 31, 32, 33 and 35 are embedded in the transmission. By integrating additional signals from downhole motor 20 and pump 19, an integrated subsurface communication system is provided.

While the presently preferred form of the system has been shown and described, and several modifications thereof discussed, persons skilled in this art will readily appreciate that various additional changes and modifications may be made without departing from the scope of the invention, as defined and differentiated by the following claims.

## Claims

1. An oil well installation (15), comprising:
tubing (17) arranged in a well (18) and forming a flow channel to a surface level for fluids originating from below said surface level;
a pump (19) disposed in said well;
a linear actuator (20) disposed in said well and configured to actuate said pump;
a cable (24) supplying electric power from said surface level to said linear actuator;
a surface controller (50) connected with said linear actuator and configured to control said linear actuator;
multiple down hole sensors (30, 31, 32, 33, 34 and 35) configured to sense multiple different operating parameters of said linear actuator and/or said pump;
a down hole signal processor (40) communicating with said sensors and configured to receive sensor data from said sensors and to output serial data;
a communication cable (23) between said signal processor and said surface controller, said communication cable having at least two paired transmission lines (25, 26):
**characterised in that** the oil well installation (15) further comprises
a down hole differential signal driver (41) configured to receive said serial data and to output data signals to said paired transmission lines; and
a surface receiver (27) connected to said communication cable and configured to receive said signals from said differential signal driver via said paired transmission lines.

2. The oil well installation set forth in claim 1, wherein said multiple sensors are selected from a group consisting of a temperature sensor (32, 33), a position sensor (34), a vibration sensor (35), an inclination sensor (35) and a pressure sensor (30, 31).

3. The oil well installation set forth in claim 2, wherein said multiple sensors are selected from a group consisting of a motor stator thermocouple (33), a pump inlet temperature transducer (32), a pump inlet pressure transducer (31), a pump outlet pressure transducer (30), and a synchronous serial interface encoder (34) configured to sense position of a shaft (22) of said actuator.

4. The oil well installation set forth in claim 1, wherein said linear actuator comprises a brushless permanent magnet motor and said sensors comprise a motor position encoder (34) configured to sense position of a shaft (22) of said actuator and an operating sensor selected from a group consisting of a temperature sensor (32, 33), a pressure sensor (30, 31), a vibration sensor (35) and an inclination sensor (35), and wherein said serial data comprises position data from said encoder and operating data from said operating sensor.

5. The oil well installation set forth in claim 1, wherein said surface controller comprises a clock (28) communicating with said signal processor and said serial data from said signal processor comprises a synchronous serial data output.

6. The oil well installation set forth in claim 1, and further comprising an analog to digital converter (43) communicating with at least one of said sensors and a multiplexer (42) configured to receive sensor signals from at least two of said sensors and to output a serial data signal.

7. The oil well installation set forth in claim 1, wherein said actuator comprises a stator (21) having an inner opening and a shaft (22) disposed in said opening and configured and arranged to reciprocate linearly in an axial direction relative to said stator under the effect of a magnetic field generated by said stator.

8. The oil well installation set forth in claim 7, wherein said pump comprises an inlet (51), an outlet (52), and a piston (70) coupled to said actuator shaft.

## Patentansprüche

1. Ölbohrlochinstallation (15), umfassend:
Rohr (17), das in einem Bohrloch (18) vorgesehen ist und einen Strömungskanal zu einem Oberflächenniveau für Fluide bildet, die von unterhalb des Oberflächenniveaus stammen;
eine Pumpe (19), die in dem Bohrloch angeordnet ist;
einen Linearaktuator (20), der in dem Bohrloch angeordnet und dazu konfiguriert ist, die Pumpe zu betätigen;
ein Kabel (24), das elektrische Leistung von dem Oberflächenniveau an den Linearaktuator liefert;
einen Oberflächencontroller (50), der mit dem Linearaktuator verbunden und dazu konfiguriert ist, den Linearaktuator zu steuern;
mehrere Untertagesensoren (30, 31, 32, 33, 34 und 35), die dazu konfiguriert sind, mehrere unterschiedliche Betriebsparameter des Linearaktuators und/oder der Pumpe zu erfassen;
einen Untertagesignalprozessor (40), der mit den Sensoren kommuniziert und dazu konfiguriert ist, Sensordaten von den Sensoren zu empfangen und serielle Daten auszugeben;
ein Kommunikationskabel (23) zwischen dem Signalprozessor und dem Oberflächencontroller, wobei das Kommunikationskabel mindestens zwei gepaarte Übertragungsleitungen (25, 26) aufweist: **dadurch gekennzeichnet, dass** die Ölbohrlochinstallation (15) ferner Folgendes umfasst:
einen Untertagedifferenzsignaltreiber (41), der dazu konfiguriert ist, die seriellen Daten zu empfangen und Datensignale an die gepaarten Übertragungsleitungen auszugeben; und
einen Oberflächenempfänger (27), der mit dem Kommunikationskabel verbunden und dazu konfiguriert ist, die Signale von dem Differenzsignaltreiber über die gepaarten Übertragungsleitungen zu empfangen.

2. Ölbohrlochinstallation nach Anspruch 1, wobei die mehreren Sensoren aus einer Gruppe ausgewählt sind, bestehend aus einem Temperatursensor (32, 33), einem Positionssensor (34), einem Vibrationssensor (35), einem Neigungssensor (35) und einem Drucksensor (30, 31).

3. Ölbohrlochinstallation nach Anspruch 2, wobei die mehreren Sensoren aus einer Gruppe ausgewählt sind, bestehend aus einem Motorstator-Thermoelement (33), einem Pumpeneinlass-Temperaturwandler (32), einem Pumpeneinlass-Druckwandler (31), einem Pumpenauslass-Druckwandler (30) und einem synchronen Seriellschnittstellen-Encoder (34), der dazu konfiguriert ist, die Position einer Welle (22) des Aktuators zu erfassen.

4. Ölbohrlochinstallation nach Anspruch 1, wobei der Linearaktuator einen bürstenlosen Permanentmagnetmotor umfasst und die Sensoren einen Motorpositionsencoder (34) umfassen, der dazu konfiguriert ist, die Position einer Welle (22) des Aktuators zu erfassen, und einen Betriebssensor umfasst, ausgewählt aus der Gruppe bestehend aus einem Temperatursensor (32, 33), einem Drucksensor (30, 31), einem Vibrationssensor (35) und einem Neigungssensor (35), und wobei die seriellen Daten Positionsdaten von dem Encoder und Betriebsdaten von dem Betriebssensor umfassen.

5. Ölbohrlochinstallation nach Anspruch 1, wobei der Oberflächencontroller einen Taktgeber (28) umfasst, der mit dem Signalprozessor kommuniziert, und die seriellen Daten von dem Signalprozessor eine synchrone serielle Datenausgabe umfassen.

6. Ölbohrlochinstallation nach Anspruch 1 und ferner umfassend einen Analog-Digital-Wandler (43), der mit mindestens einem der Sensoren kommuniziert, und einen Multiplexer (42), der dazu konfiguriert ist, Sensorsignale von mindestens zwei der Sensoren zu empfangen und ein serielles Datensignal auszugeben.

7. Ölbohrlochinstallation nach Anspruch 1, wobei der Aktuator einen Stator (21), der eine innere Öffnung aufweist, und eine Welle (22) umfasst, die in der Öffnung angeordnet und dazu konfiguriert und angebracht ist, sich unter der Wirkung eines durch den Stator erzeugten Magnetfelds linear in einer axialen Richtung relativ zu dem Stator hin- und herzubewegen.

8. Ölbohrlochinstallation nach Anspruch 7, wobei die Pumpe einen Einlass (51), einen Auslass (52) und einen Kolben (70) umfasst, der mit der Aktuatorwelle verbunden ist.

## Revendications

1. Installation de puits de pétrole (15), comprenant :
un tubage (17) agencé dans un puits (18) et formant un canal d'écoulement vers un niveau de surface pour des fluides provenant d'en dessous dudit niveau de surface ;
une pompe (19) disposée dans ledit puits ;
un actionneur linéaire (20) disposé dans ledit puits et configuré pour actionner ladite pompe ;
un câble (24) alimentant de l'énergie électrique à partir dudit niveau de surface jusqu'audit actionneur linéaire ;
un dispositif de commande de surface (50) connecté audit actionneur linéaire et configuré pour commander ledit actionneur linéaire ;
de multiples capteurs de fond de trou (30, 31, 32, 33, 34 et 35) configurés pour détecter de multiples paramètres opérationnels différents dudit actionneur linéaire et/ou de ladite pompe ;
un processeur de signal de fond de trou (40) communiquant avec lesdits capteurs et configuré pour recevoir des données de capteur provenant desdits capteurs et pour délivrer en sortie des données en série ;
un câble de communication (23) entre ledit processeur de signal et ledit dispositif de commande de surface, ledit câble de communication ayant au moins deux lignes de transmission appariées (25, 26) : **caractérisée en ce que** l'installation de puits de pétrole (15) comprend en outre
un pilote de signal différentiel de fond de trou (41) configuré pour recevoir lesdites données en série et pour délivrer en sortie des signaux de données auxdites lignes de transmission appariées ; et
un récepteur de surface (27) connecté audit câble de communication et configuré pour recevoir lesdits signaux depuis ledit pilote de signal différentiel via lesdites lignes de transmission appariées.

2. Installation de puits de pétrole selon la revendication 1, dans laquelle lesdits multiples capteurs sont choisis parmi un groupe constitué d'un capteur de température (32, 33), d'un capteur de position (34), d'un capteur de vibration (35), d'un capteur d'inclinaison (35) et d'un capteur de pression (30, 31).

3. Installation de puits de pétrole selon la revendication 2, dans laquelle lesdits multiples capteurs sont choisis parmi un groupe constitué d'un thermocouple d'un stator de moteur (33), d'un transducteur de température d'entrée de pompe (32), d'un transducteur de pression d'entrée de pompe (31), d'un transducteur de pression de sortie de pompe (30) et d'un codeur d'interface série synchrone (34) configuré pour détecter la position d'un arbre (22) dudit actionneur.

4. Installation de puits de pétrole selon la revendication 1, dans laquelle ledit actionneur linéaire comprend un moteur à aimants permanents sans balais et lesdits capteurs comprennent un codeur de position de moteur (34) configuré pour détecter la position d'un arbre (22) dudit actionneur et un capteur de fonctionnement choisi dans un groupe constitué d'un capteur de température (32, 33), d'un capteur de pression (30, 31), d'un capteur de vibration (35) et d'un capteur d'inclinaison (35), et dans laquelle lesdites données en série comprennent des données de position provenant dudit codeur et des données de fonctionnement provenant dudit capteur de fonctionnement.

5. Installation de puits de pétrole selon la revendication 1, dans laquelle ledit dispositif de commande de surface comprend une horloge (28) communiquant avec ledit processeur de signal et lesdites données en série provenant dudit processeur de signal comprennent une sortie de données en série synchrone.

6. Installation de puits de pétrole selon la revendication 1, et comprenant en outre un convertisseur analogique vers numérique (43) communiquant avec au moins l'un desdits capteurs et un multiplexeur (42) configuré pour recevoir des signaux de capteur provenant d'au moins deux desdits capteurs et pour délivrer en sortie un signal de données en série.

7. Installation de puits de pétrole selon la revendication 1, dans laquelle ledit actionneur comprend un stator (21) ayant une ouverture interne et un arbre (22) disposé dans ladite ouverture et configuré et agencé pour aller et venir linéairement dans une direction axiale par rapport audit stator sous l'effet d'un champ magnétique généré par ledit stator.

8. Installation de puits de pétrole selon la revendication 7, dans laquelle ladite pompe comprend une entrée (51), une sortie (52) et un piston (70) couplé audit arbre d'actionneur.
